# EUROPEAN PATENT APPLICATION

(11) **EP 4 775 470 A2**
(43) Date of publication of application: **15.07.2026**
(21) Application number: 26180587.3
(22) Date of filing: 03.03.2022
(51) Int. Cl.: B62B 1/04

(54) **ELECTRIC GOLF TROLLEY AND ELECTRIC GOLF TROLLEY BATTERY PACK**

(30) Priority: 04.03.2021 GB 202103071; 15.12.2021 GB 202118195
(62) Divisional of application: 25156090.0
(71) Applicant: Motocaddy Limited, Hertfordshire CM22 7DG (GB)
(72) Inventor: STRAKER, Paul, Great Hallingbury, CM22 7DG (GB); SIMPSON, Cris, Great Hallingbury, CM22 7DG (GB)
(74) Representative: Patent Boutique LLP

(57) **Abstract**

An electric golf trolley including a battery for powering the trolley; the electric golf trolley having a discharging configuration in which the electric golf trolley may be powered by the battery, and a non-discharging configuration in which powering of the electric golf trolley by the battery is substantially prevented; the electric golf trolley being further configured to transition from a driving arrangement to a storage arrangement; wherein during a transition from the driving arrangement to the storage arrangement the electric golf trolley automatically transitions from the discharging configuration to a non-discharging configuration, and/or wherein during a transition from the storage arrangement to the driving arrangement the electric golf trolley automatically transitions from the non-discharging configuration to a discharging configuration.

## Description

### Field

The present invention relates to an electric golf trolley, in particular a foldable electric golf trolley, and to a battery pack for an electric golf trolley.

### Background

Electric golf trolleys generally have an on-board battery to power an electric motor which, in turn, drives rotation of the trolley's wheels.

Many electric golf trolleys comprise a removable battery pack which must be removed, usually prior to folding the trolley, for charging before placing the battery pack back in the trolley before the next use. Battery packs must usually be removed because the same ports of the battery pack are typically used for both charging the battery and powering the trolley, i.e. discharging, and thus the battery cannot usually remain physically connected to the trolley whilst charging. This, amongst other things, avoids potential damage to the battery through attempted simultaneous charging and discharging. US 5526894 A (Wang), CN 211 617779 U (Guangzhou) and US 5180023 A (Reimers) are acknowledged.

Providing a removable battery pack which must be removed for charging should avoids or minimises the risk of potential damage to the trolley or its surroundings, including fire-related damage, because the trolley cannot be 'live', i.e. in a powered state, if the battery pack is absent. If a trolley remains 'live' during storage, the trolley's control system may overheat, or the motor of the trolley may be unintentionally actuated potentially leading to damage to the trolley's surroundings, e.g. the boot of a car, or harm to the user.

Other known electric golf trolley battery packs comprise disconnectable plugs or switches which also require manual intervention by the user to ensure that the battery pack is electrically disconnected from the electric golf trolley before storage. Users are instructed to flip the switch or disconnect the plug before storage.

However, the applicant has found that despite these features the risks described above are still realised and reported. On investigation by the applicant, it was identified that user's do not reliably remove a battery pack or take the necessary manual steps to disconnect a battery pack from an electric golf trolley immediately following use and/or before storage. They may find it inconvenient, time consuming, or simply forget.

Moreover, on further investigation the applicant identified that problems associated with existing battery packs are compounded by the typical configuration of foldable electric golf trolleys whereby part of the trolley's frame may block removal of the battery pack once the trolley is in a folded state. Therefore, even if a user remembers that a battery pack should be removed after initially forgetting this and folding the electric golf trolley, they may be less inclined to take the various manual actions necessary to remove the battery pack.

There therefore exists the need to provide an electric golf trolley and battery pack for an electric golf trolley which addresses the described technical problems. In particular, there is a need to minimise or remove the existing potential for damage to the battery pack, the electric golf trolley to which it is attached, as well as the trolley's surrounds, which may include users themselves.

The applicant identified and the present invention aims to address, at least to an extent, these, and other problems with the prior art.

### Summary

Accordingly, in a first aspect, the present invention provides an electric golf trolley including a battery for powering the electric golf trolley; the electric golf trolley having a discharging configuration in which the electric golf trolley may be powered by the battery, and a non-discharging configuration in which powering of the electric golf trolley by the battery is substantially prevented. The electric golf trolley is further configured to transition between a driving arrangement and a storage arrangement.

The electric golf trolley is configured such that during the transition from the driving arrangement to the storage arrangement, the electric golf trolley automatically transitions from the discharging configuration to a non-discharging configuration.

Additionally, or alternatively, the electric golf trolley is configured such that during the transition from the storage arrangement to the driving arrangement the electric golf trolley automatically transitions from the non-discharging configuration a discharging configuration.

Therefore, the electric golf trolley may automatically transition (i.e. without a separate user-initiated action) from a configuration in which powering of the electric golf trolley, in particular the motor and/or control unit, by the battery is permitted to a configuration in which powering of the electric golf trolley by the battery is substantially prevented, for instance by electrically and/or physically disconnecting the battery as a power source, when the electric golf trolley transitions from the driving arrangement to the storage arrangement.

Similarly, the electric golf trolley may automatically transition (i.e. without a separate user-initiated action) from a configuration in which powering of the electric golf trolley by the battery is substantially prevented to a configuration in which powering of the electric golf trolley is permitted, for instance by electrically and/or physically connecting the battery as a power source, when the electric golf trolley transitions and/or is returned from the storage arrangement to the driving arrangement.

It will be appreciated that the physical connection and/or physical disconnection of the battery may include the movement of a switch or switches, or otherwise separating electrical connectors, located between the battery cells and the powered and/or powerable features of the electric golf trolley, such as the control unit and/or electric motor.

As used herein, the term "substantially prevented" in relation to powering of the electric golf trolley in the non-discharging configuration, refers to the battery being substantially electrically disconnected from the electric golf trolley. In embodiments, the battery may also be substantially mechanically disconnected from the electric golf trolley in the non-discharging configuration.

The user therefore no longer needs to remember or be directed to disconnect a battery pack of the electric golf trolley for storage because the electric golf trolley transitions from the discharging to the non-discharging configuration and/or from the non-discharging to the discharging configuration during the performance of an alternative user-initiated action associated with the use of the trolley. Namely, the transition to and/or from a driving to a storage state.

Thus, in the discharging configuration, powering of the electric golf trolley, in particular a motor and/or control unit, by the battery is permitted and in the non-discharging configuration powering of the electric golf trolley by the battery is substantially prevented even while the battery is *in situ,* i.e. part of the electric golf trolley.

As used herein, the term 'battery' refers to one or more cells in which chemical energy is converted into electricity for use as a power source. As set out herein, generally, the battery is rechargeable.

As used herein, the term 'driving arrangement' refers to the electric golf trolley being in an arrangement in which it is being driven by the user, typically holding and transporting a golf bag or the like during play. As used herein, the term 'driveable arrangement' refers to the electric golf trolley being in an arrangement in which it isn't being driven by a user, typically holding a golf bag or the like.

As used herein, the term 'storage arrangement' refers to the electric golf trolley being in an arrangement in which it is not driveable. Typically, an arrangement in which the golf bag has been removed and/or the golf trolley has been folded or otherwise collapsed for storage, for instance in a car boot, or the user's home or premises.

Preferably, the battery remains in the golf trolley when the electric golf trolley is in the non-discharging configuration. In embodiments, the battery is housed in a battery pack. In embodiments, the battery pack is substantially devoid of external cables or the like. In other words, the battery pack is preferably cableless. In embodiments, the electric golf trolley comprises a battery pack housing for a battery pack and the battery pack may be substantially bounded by the battery pack housing in use. In embodiments, the electric golf trolley may include an in-built battery, i.e. a battery which is typically non-removable in normal use.

The transition between the discharging configuration and non-discharging configuration may include the movement of a switch or switches, or otherwise separating electrical connectors, located between the cells of a battery or a port for a removable battery pack and the powered and/or powerable features of the electric golf trolley, such as the control unit and/or electric motor.

Preferably, the automatic transition from the discharging configuration to the non-discharging configuration, and/or vice versa, occurs between a driveable arrangement and the storage arrangement of the electric golf trolley. Transitional configurations and/or action with which automatic transition from the discharging configuration to the non-discharging configuration, and vice versa, may be associated include parking and/or a parked configuration; removing and/or replacing a golf bag, folding and/or collapsing the golf trolley for storage.

Typically, an electric golf trolley may pass or be passed through one or more transitional configurations as it transitions from the driving arrangement to the storage arrangement and vice-versa. The automatic transition from the discharging configuration to the non-discharging configuration, and vice versa, may be associated with being in or passing through one or more of these transitional configurations, and/or remaining in one or more of said transitional configurations.

It is particularly advantageous that the automatic transition from the discharging configuration to the non-discharging configuration, and/or vice versa, is associated with folding and/or unfolding the electric golf trolley. The folded configuration being a storage arrangement.

Therefore, the electric golf trolley may be effectively "switched off" by breaking the connection between the battery and the powerable components of the trolley when the trolley is folded for storage and/or transport, and the battery may optionally be reconnected to the powerable components of the trolley when the trolley is unfolded.

In embodiments, in the discharging configuration charging of the battery may be substantially prevented. In embodiments, in the non-discharging configuration charging of the battery may be permitted. Thus, in the discharging configuration charging of a battery may be prevented so that simultaneous charging and discharging of a battery, which could cause damage to the battery or its surroundings, is avoided. Similarly, charging of the battery is only permitted when the electric golf trolley is in the non-discharging configuration.

In embodiments, the automatic transition from the discharging configuration to the non-discharging configuration is associated with folding the electric golf trolley or part thereof. In embodiments, the automatic transition from the non-discharging configuration to the discharging configuration is associated with unfolding the electric golf trolley, or part thereof.

Therefore, the electric golf trolley may automatically transition (i.e. without a separate user-initiated action) from a configuration in which powering of the electric golf trolley is permitted, to a configuration in which powering of the electric golf trolley is substantially prevented, when the electric golf trolley is folded towards the storage arrangement.

Similarly, additionally or alternatively, the electric golf trolley may automatically transition (i.e. without a separate user-initiated action) from a configuration in which powering of the electric golf trolley is substantially prevented, to a configuration in which powering of the electric golf trolley is permitted, when the electric golf trolley is unfolded from the storage arrangement to the driving or a driveable arrangement.

The user therefore no longer needs to remember or be directed to disconnect a battery pack of the electric golf trolley for storage because the electric golf trolley transitions from the discharging to the non-discharging configuration and/or from the non-discharging to the discharging configuration during the performance of an alternative user-initiated action associated with the use of the trolley, namely transitioning the electric golf trolley between the driving or a driveable arrangement and the storage arrangement by folding and/or unfolding the electric golf trolley.

In embodiments, folding the electric golf trolley may automatically transition the electric golf trolley from the discharging configuration to the non-discharging configuration, and the electric golf trolley may be arranged to remain in the non-discharging configuration during and following subsequent unfolding of the electric golf trolley.

In other words, the electric golf trolley may be configured such that folding the electric golf trolley (towards the storage arrangement) automatically actuates a transition from the discharging configuration to the non-discharging configuration, and unfolding the electric golf trolley (towards the driving or driveable arrangement) does not automatically actuate a transition from the non-discharging configuration to the discharging configuration.

Therefore, a user may be able to store the electric golf trolley in an unfolded arrangement wherein the powerable features of the electric golf trolley are electrically disconnected from the battery and charging of the battery is simultaneously permitted.

However, the automatic transition from the discharging configuration to the non-discharging configuration, and vice versa, may be associated with other transitional configurations.

For instance, the removal and/or replacement of a golf bag may effect the transition from the discharging configuration to the non-discharging configuration and vice versa. Removing and replacing the golf bag may effect said transition(s) by means of a switch and/or weighing scale and/or proximity sensor, or the like.

Similarly, parking the golf trolley may effect said transition. For example, said transition may occur as a result of the user releasing a drive button and/or handle.

Additionally, or alternatively, the electric golf trolley may be configured to transition to a non-discharging configuration once a pre-determined amount of time after parking has elapsed without further input from a user.

In second, related aspect, the present invention provides an electric golf trolley including a battery for powering the electric golf trolley. The electric golf trolley has a chargeable configuration in which charging of the battery is permitted, and a unchargeable configuration in which charging of the battery is substantially prevented.

The electric golf trolley is further configured to transition between a driving arrangement and a storage arrangement.

The electric golf trolley is configured such that during the transition from the driving arrangement to the storage arrangement the electric golf trolley automatically transitions from an unchargeable configuration to a chargeable configuration.

Additionally, or alternatively, the electric golf trolley is configured such that during the transition from the storage arrangement to the driving arrangement the electric golf trolley automatically transitions from a chargeable configuration to an unchargeable configuration.

Therefore, the electric golf trolley is automatically transitioned (i.e. without a separate user-initiated action) from a configuration in which charging of the battery is substantially prevented to a configuration in which charging of the battery is permitted when the electric golf trolley transitions from a driving arrangement to a storage arrangement and/or the electric golf trolley is automatically transitioned (i.e. without a separate user-initiated action) from a configuration in which charging of the battery is permitted to a configuration in which charging of the battery is substantially prevented when the electric golf trolley transitions from a storage arrangement to a driving arrangement.

The user therefore no longer needs to be directed to place the battery pack in a chargeable configuration because the electric golf trolley transitions from the unchargeable to the chargeable configuration and/or from the chargeable to the unchargeable configuration during the performance of an alternative user-initiated action associated with the use of the trolley. Namely, the transition to and/or from a driving to a storage state.

Preferably, the automatic transition from the unchargeable configuration to the chargeable configuration, and vice versa, occurs between a driveable arrangement and the storage arrangement. Transitional configurations and/or action with which automatic transition from the unchargeable configuration to the chargeable configuration, and vice versa, may be associated include parking and/or a parked configuration; removing and/or replacing a golf bag, folding and/or collapsing the golf trolley for storage. The transition between the chargeable configuration and unchargeable configuration may include the movement of a switch or switches, or otherwise separating electrical connectors.

It is particularly advantageous that the automatic transition from the unchargeable to the chargeable configuration, and/or vice versa, is associated with folding and/or unfolding the electric golf trolley. The folded configuration being a storage arrangement.

Preferably, the battery remains in the golf trolley when charging. In embodiments, the battery is housed in a battery pack. In embodiments, the battery pack is substantially devoid of external cables or the like. In other words, the battery pack is preferably cableless. In embodiments, the electric golf trolley comprises a battery pack housing for a battery pack and the battery pack is bounded by the battery pack housing in use.

In embodiments, the battery pack and the battery pack housing may include corresponding parts of a connector for electrically connecting the battery to the drive elements, such as the control unit and/or motor, of the electric golf trolley. In embodiments, the corresponding parts of the connector may be concealed when the battery pack is inserted, i.e. when the battery pack is *in situ.*

In embodiments, in the chargeable configuration powering of the electric golf trolley, in particular the drive elements, such as the control unit and/or electric motor, may be substantially prevented. In embodiments, in the unchargeable configuration powering of the electric golf trolley may be permitted.

In embodiments, the automatic transition from the unchargeable configuration to the chargeable configuration is associated with folding the electric golf trolley or part thereof. In embodiments, the automatic transition from the chargeable configuration to the unchargeable configuration is associated with unfolding the electric golf trolley, or part thereof.

Therefore, the electric golf trolley may automatically transition (i.e. without a separate user-initiated action) from a configuration in which charging of the battery is substantially prevented to a configuration in which charging of the battery is permitted when the electric golf trolley is folded towards the storage arrangement.

Similarly, additionally or alternatively, the electric golf trolley may automatically transition (i.e. without a separate user-initiated action) from a configuration in which charging of the battery is permitted, to a configuration in which charging of the battery is substantially prevented when the electric golf trolley is unfolded from the storage arrangement to the driving or a driveable arrangement.

However, the automatic transition from the unchargeable configuration to the chargeable configuration, and vice versa, may be associated with other transitional configurations, in particular those set out in detail above in relation to the previous aspect.

In embodiments, folding the electric golf trolley may automatically transition the electric golf trolley from the unchargeable configuration to the chargeable configuration, and the electric golf trolley may be arranged to remain in the chargeable configuration during and following a subsequent unfolding of the electric golf trolley.

In other words, the electric golf trolley may be configured such that folding the electric golf trolley (towards the storage arrangement) automatically actuates a transition from the unchargeable configuration to the chargeable configuration, and unfolding the electric golf trolley (towards the driving or driveable arrangement) does not automatically actuate a transition from the chargeable configuration to the unchargeable configuration.

Therefore, a user may be able to store the electric golf trolley in an unfolded arrangement wherein the powerable features of the electric golf trolley are electrically disconnected from the battery and charging of the battery is simultaneously permitted.

In embodiments, the electric golf trolley may be configured to require a user actuated manual reset of the electric golf trolley to the discharging and/or unchargeable configurations, for example following unfolding the electric golf trolley.

In embodiments, the transition from the discharging to the non-discharging configuration is substantially simultaneously automatically actuated with the transition from a unchargeable to a chargeable configuration of the electric golf trolley.

Thus, when in the discharging configuration the electric golf trolley may also be in the unchargeable configuration such that charging of the battery may be substantially prevented when the electric golf trolley is powered by the battery.

Conversely, when in a non-discharging configuration the electric golf trolley may also be in the chargeable configuration such that charging of the battery may be permitted when powering of the electric golf trolley by the battery is prevented.

This configuration is particularly advantageous because it substantially prevents the simultaneous charging and discharging of the battery which may otherwise damage the battery. Because the transition from the discharging / unchargeable to the non-discharging / chargeable configuration is automatically actuated during folding of the electric golf trolley, or part thereof, the user need not be instructed to ensure that the battery is not simultaneously discharged and charged.

Thus, the transition between the discharging / unchangeable configurations and the non-discharging / chargeable configurations is automatically actuated by the electric golf trolley when a user initiates a separate action which is not primarily directed to the transition of the electric golf trolley between the discharging / unchangeable to and the non-discharging / chargeable configurations. For example, the separate user-initiated action is folding and/or unfolding the electric golf trolley. In other words, a user is not required to manually remove the battery pack or make an action the primary purpose of which is to transition the electric golf trolley between the discharging / unchargeable and the non-discharging / chargeable configurations. Preferably, the electric golf trolley automatically transitions from a discharging and unchargeable configuration to a non-discharging and chargeable configuration as the electric golf trolley is collapsed from a driveable arrangement to a storage arrangement. Optionally, the electric golf trolley automatically transitions from a non-discharging and chargeable configuration to a discharging and unchargeable configuration as the electric golf trolley is expanded from a storage arrangement to a driveable arrangement.

Preferably, the transition from the discharging to the non-discharging configuration and the transition from a unchargeable to a chargeable configuration of the electric golf trolley may be effected by the same action (e.g. folding the golf trolley or part thereof). Preferably, the transition from the non-discharging to the discharging configuration and the transition from a chargeable to the unchargeable configuration of the electric golf trolley are effected by the same action (e.g. unfolding the golf trolley or part thereof).

In embodiments, the electric golf trolley may additionally include a manual and/or automatic override feature which enables the golf trolley to be placed in a non-discharging and/or chargeable configuration when not in a storage arrangement, e.g. in a driveable arrangement, in particular if the automatic transition hereinbefore described is associated with folding or unfolding the electric golf trolley from the storage arrangement.

For instance, the manual and/or automatic override feature may enable the electric golf trolley to be placed in a non-discharging and/or chargeable configuration when in an unfolded configuration and/or driveable configuration. This may for instance enable the user to store their golf trolley in an unfolded configuration, with or without a golf bag *in situ,* which may be more convenient. However, preferably the manual and/or automatic override may not allow the user to place the electric golf trolley in a discharging configuration when in a storage (e.g. folded) arrangement. Preferably, when a manual override is provided the chargeable configuration is a non-discharging configuration. The unchargeable configuration may be a discharging configuration.

The electric golf trolley may nevertheless be configured such that during the transition from the driving or driveable arrangement to the storage arrangement, folding the electric golf trolley automatically actuates a transition from the discharging configuration to the non-discharging configuration and, additionally or alternatively, the electric golf trolley may be configured such that during the transition from the storage arrangement to the driving or driveable arrangement, unfolding the electric golf trolley automatically actuates a transition from the non-discharging configuration to a discharging configuration, unless a said manual and/or automatic override feature is active.

In embodiments, the manual override feature may include means for disabling the otherwise automatic transition from the non-discharging configuration to the discharging configuration and/or from the chargeable configuration to the unchargeable configuration during a transition from the storage arrangement to the driveable arrangement.

A manual override may be a switch or other mechanical feature. The automatic override may be in form of a timer. This may improve user compliance and/or safety.

In relation to all aspects, a transition from the discharging configuration to the non-discharging configuration of the electric golf trolley, and/or from the unchargeable to the chargeable configuration of the electric golf trolley may include a mechanical displacement of part of the electric golf trolley.

In embodiments, in the chargeable configuration powering of the electric golf trolley, in particular the drive elements, such as the control unit and/or electric motor, is substantially prevented.

In embodiments, in the unchargeable configuration powering of the electric golf trolley, in particular the drive elements, such as the control unit and/or electric motor, is permitted.

In embodiments, the electric golf trolley may include a frame which is at least partially collapsible to the storage arrangement; and collapsing the frame may automatically transition the electric golf trolley from the discharging configuration to the non-discharging configuration of the electric golf trolley and/or automatically transition the electric golf trolley from the unchargeable to the chargeable configuration.

In embodiments, the electric golf trolley may comprise a base and a frame, and the base and the frame may be at least partially reversibly foldable relative to one another during the transition from the driving or driveable arrangement to the storage arrangement.

In embodiments, the frame may include at least one moveable portion, wherein the or each moveable portion of the frame may be reversibly foldable relative to the base during the transition from the driving or a driveable arrangement to the storage arrangement, wherein folding the or each moveable portion of the frame relative to the base may automatically transition the electric golf trolley from the discharging configuration to the non-discharging configuration and/or from the unchargeable configuration to the chargeable configuration.

Additionally, or alternatively, unfolding the or each moveable portion of the frame relative to the base may automatically transition the electric golf trolley from the non-discharging configuration to the discharging configuration and/or from the chargeable configuration to the unchargeable configuration.

In embodiments, the electric golf trolley may comprise a foldable frame including one or more hinges configured to permit a first portion of the frame to move relative to a second portion of the frame. In embodiments, the frame, and/or first and second frame portions, are configured to move relative to the base, in order that the frame may reversibly collapse from a substantially expanded configuration towards a substantially collapsed configuration.

In embodiments, the or each moveable portion of the frame may cause the simultaneous or subsequent movement of another portion of the electric golf trolley which may form part of the frame or part of the base.

In embodiments, the electric golf trolley may further comprise a switch configured to transition the electric golf trolley between the discharging configuration and the non-discharging configuration and/or between the unchargeable configuration and the chargeable configuration. In embodiments, the switch may be automatically actuated during a transition of the electric golf trolley from a driving or driveable arrangement to the storage arrangement and/or during a transition from the storage arrangement to the driving or driveable arrangement. The switch may preferably be actuated by folding and/or unfolding the electric golf trolley. In embodiments, the switch may be configured to be actuated through movement of a first said moveable portion of the frame.

In embodiments, the switch may be arranged on the base and may be actuated by a first said moveable portion of the frame which is configured to interact with the switch during a transition between the driving or driveable arrangement and the storage arrangement.

In embodiments, parts of the switch may be arranged on corresponding portions of the base and the frame. In embodiments, at least part of the switch may be arranged on the first said moveable portion of the frame.

In embodiments, the switch may have a first position in the driving or driveable arrangement and a second position in the storage arrangement, and the switch may be reversibly moveable therebetween.

In embodiments, the switch may be configured to be actuated, i.e. move between the first and second positions thereof through movement of the or each moveable portion of the frame. Preferably, the switch is actuated through folding and/or unfolding of the electric golf trolley, i.e. through movement of the first said moveable portion of the frame relative to the base. For example, when the electric golf trolley is folded and/or unfolded, the switch is automatically actuated via movement of the first said moveable portion of the frame.

In embodiments, the first said moveable portion of the frame, or part thereof, contacts the switch to transition the switch between the first position and the second position thereof.

In embodiments, the first said moveable portion of the frame may be attached to the base by a hinge and at least part of the switch may be arranged on the base proximal to the hinge.

In embodiments, the switch may be concealed in normal use so that a user cannot manually actuate the switch without transitioning the electric golf trolley between the driving or driveable arrangement and the storage arrangement.

In embodiments, the hinge defines a point about which the first said moveable portion of the frame is configured to pivot, wherein pivoting of the first said moveable portion of the frame relative to the base actuates the switch.

In embodiments, the first said moveable portion of the frame may include means to operatively engage the switch during the transition from the driving or driveable arrangement to the storage arrangement and, optionally, vice versa.

As used herein, the term "operatively engage" may refer to the direct contact on the switch, or to the electric and/or magnetic contact with the switch (with or without physical contact therewith) brought about by the proximity of electrified and/or magnetised connectors.

In embodiments, the electric golf trolley may comprise more than one switch to transition the electric golf trolley between the discharging and non-discharging configurations and/or between the chargeable and unchargeable configurations. In embodiments, a first switch may dictate whether the electric golf trolley is in the discharging configuration or the non-discharging configuration and a second switch may dictate whether the electric golf trolley is in the unchargeable configuration or chargeable configuration.

In embodiments, a single switch may be provided which dictates whether the electric golf trolley is in the dischargeable or non-dischargeable configuration and simultaneously whether the electric golf trolley is in the unchargeable or chargeable configuration.

In embodiments, the switch may be a rocker switch. In embodiments, the first said moveable portion of the frame may include a projection configured to engage the rocker switch during the transition from the driving or driveable arrangement to the storage arrangement and, optionally, vice versa. In embodiments, the projection may be integrally formed with the first said moveable portion of the frame. In embodiments, the projection may be a moulded projection.

In embodiments, the first said moveable portion of the frame may be proximal to or form part of the hinge. In embodiments, the first said moveable portion of the frame may include a projection configured to slide over a surface of the rocker switch in order to transition the rocker switch between the positions thereof.

In embodiments, the rocker switch may be a single pole switch. In embodiments the rocker switch may be a multi-pole switch. As used herein, the term "pole" refers to the number of circuits controlled by the switch.

In embodiments, the rocker switch may be a single throw switch. In embodiments, the rocker switch may be a multi-throw switch. As used herein, the term "throw" refers to the number of contact points of the switch.

In embodiments, the rocker switch may be a multi-pole multi-throw switch.

In embodiments, in a first position of the switch a discharging circuit may be complete and/or a charging circuit may be broken, and in a second position of the switch the charging circuit may be complete and/or the discharging circuit may be broken.

As used herein, the term "complete" refers to the circuit being closed and uninterrupted.

As used herein, the term "broken" refers to the circuit being open and interrupted, i.e. not complete.

In embodiments, the switch may be in the second position when the electric golf trolley is in the storage arrangement, and in the second position the charging circuit may be complete and/or the discharging circuit may be broken.

In embodiments, at an intermediate position between the first and second positions of the switch each of the discharging circuit and the charging circuit may be broken. Therefore, during the transition between the driving or driveable arrangement and the storage arrangement the electric golf trolley is, at least for a moment, in neither the discharging configuration nor the charging configuration.

In embodiments, the electric golf trolley may comprise a non-latching rocker switch, for example a three position non-latching rocker switch. As used herein, the term "non-latching" refers to a switch which requires continuous compression to remain in a position.

In embodiments, the switch may be configured to revert to the intermediate position if continuous pressure is not applied to the switch in the first or second positions of the switch. In embodiments, the electric golf trolley may be a latching rocker switch, i.e. a switch which does not require continuous compression to remain in a set position.

In embodiments, the switch may comprise one or more sets of contacts comprising electrically conductive material. In embodiments, the or each set of contacts may be arranged such that when the electric golf trolley is in the driving arrangement a discharging circuit may be complete, and/or a charging circuit may be broken. In embodiments, when the electric golf trolley is in the storage arrangement the charging circuit may be complete and/or the discharging circuit may be broken.

In embodiments, a first set of contacts may comprise first and second discharging terminals arranged on the base and a third discharging terminal arranged on a part of the first said moveable portion of the frame which is proximal to the first and second discharging terminals when the electric golf trolley is in the driving arrangement such that the third discharging terminal is in electrical contact with the first and second discharging terminals in the driving arrangement.

In embodiments, the first and second discharging terminals may comprise electrically conductive pins (formed of brass, for example) arranged on the base and the third discharging terminal may comprise an electrically conductive strip arranged on part of the first said moveable portion of the frame which is proximal to the two pins when the electric golf trolley is in the driving arrangement.

In embodiments, a second set of contacts may comprise first and second charging terminals arranged on the base and a third charging terminal arranged on a part of the first said moveable portion of the frame which is proximal to the first and second charging terminals when the electric golf trolley is in the storage arrangement such that the third charging terminal is in electrical contact with the first and second discharging terminals in the storage arrangement.

In embodiments, the first and second charging terminals may comprise electrically conductive pins located arranged on the base and the third charging terminal may comprise an electrically conductive strip arranged on part of the first said moveable portion of the frame which is proximal to the two pins when the electric golf trolley is in the storage arrangement.

In embodiments, the switch may comprise three pins in total, wherein one of the pins is shared between the discharging and charging terminals.

In embodiments, each pin may be spring loaded. Thus, the contact and therefore the electrical connection between each of the discharging terminals or each of the charging terminals may be improved.

In embodiments, each pin may be housed in a pin housing.

In embodiments, the hinge may include a shaft about which the first said moveable portion of the frame pivots or rotates. In embodiments, the first and second discharging and charging terminals may be arranged on the base facing the first said moveable portion of the frame, and the third discharging terminal may be arranged on a surface of the first said moveable portion of the frame which faces the first and second discharging terminals when the electric golf trolley is unfolded, and the third charging terminal may be arranged on a surface of the first said moveable portion of the frame which faces the first and second charging terminals when the electric golf trolley is folded.

In embodiments, the third discharging terminal may be arranged on a part of the surface of the first said moveable portion of the frame which is substantially opposite the first and second discharging terminals only when the electric golf trolley is in an unfolded configuration.

In embodiments, the third charging terminal may be arranged on a part of the surface of the first said moveable portion of the frame which is substantially opposite the first and second charging terminals only when the electric golf trolley is in a folded configuration.

Thus, the electric golf trolley may only be in one of either the discharging configuration or the charging configuration depending on whether the first said moveable portion of the frame is in a position corresponding to a typically an upright, unfolded position or in a typically collapsed, folded position.

In embodiments, at a transitional arrangement between the driving or driveable arrangement and the storage arrangement each of the discharging circuit and the charging circuit may be broken, i.e. OFF. In other words, during the transition between the driving or driveable arrangement and the storage arrangement the electric golf trolley is, at least for a moment, in neither the discharging configuration nor the charging configuration.

In embodiments, the electric golf trolley may include a displaceable portion which is reciprocally displaceable between a discharging position in which the battery is connected to the powerable features of the electric golf trolley and charging of the battery is substantially prevented, for example by blocking a charging port, to a charging position in which charging of the battery is permitted and the battery is substantially electrically disconnected from the electric golf trolley. The displaceable portion may be configured to be automatically displaced from the discharging position to the charging position through folding of the electric golf trolley. Additionally, or alternatively, the displaceable portion may be configured to be automatically displaced from the charging position to the discharging position through unfolding the electric golf trolley.

In embodiments, the displaceable portion may be configured to be displaced from the discharging position to the charging position through folding of the electric golf trolley, and the displaceable portion may be configured to remain in the charging position during and following a subsequent unfolding of the electric golf trolley.

In embodiments, automatic displacement of the displaceable portion to the charging position may be actuated through movement of the or each moveable portion of the frame. In embodiments, the displaceable portion may be arranged to be displaced to the discharging position thereof via a manual action of a user, preferably only via a manual action of a user.

In embodiments, the displaceable portion may be configured so that a manual user action is required to manually electrically reconnect the battery to the powerable features of the electric golf trolley following the transition from the storage arrangement to the driveable arrangement, and/or to manually substantially prevent charging of the battery, e.g. by blocking a charging port, following the transition from the storage arrangement to the driveable arrangement. In embodiments, the displaceable portion may be arranged such that manual displacement by a user from the charging position to the discharging position is substantially resisted and/or prevented when the electric golf trolley is in the storage arrangement.

In embodiments, the displaceable portion may be arranged on the frame or the base of the electric golf trolley and displaceable relative thereto.

In embodiments, the manual reset of the electric golf trolley to the unchargeable configuration may simultaneously reset the electric golf trolley to the discharging configuration. For example, the displaceable portion may include a connector for connecting the battery to the powerable features of the electric golf trolley and a screen for preventing charging of the battery.

In embodiments, the connector and the screen may be formed as a single unit and may be moved substantially in unison. Thus, as the displaceable portion is displaced from the second position to the first position via a manual action of a user, the connector connects the battery to the powerable features of the electric golf trolley and the screen simultaneously moves to block a charging port of the battery to substantially prevent charging.

In embodiments, the electric golf trolley may comprise a removable battery pack including a battery. In embodiments, the electric golf trolley may comprise a non-removable battery pack, i.e. a battery which was may not be detached from the electric golf trolley.

In embodiments, the electric golf trolley may comprise a battery charging port arranged on an external surface of the trolley. Thus, the battery when *'in situ'* may be charged without the need to remove the battery from the electric golf trolley.

In embodiments, the battery may be provided in a battery pack and concealed within a battery pack housing, and the battery pack may comprise a charging connector arranged to permit charging of the battery; and a displaceable portion movable relative to the pack housing; the displaceable portion being reciprocally moveable from a discharging position in which charging via the charging connector is substantially obstructed, to a charging position in which the charging connector is substantially exposed for charging; the battery pack being arranged such that when the displaceable portion is in the charging position, the battery is substantially electrically disconnected from the electric golf trolley.

In use, the displaceable portion may be reciprocally moveable by an element of the electric golf trolley during a transition from the driving arrangement to the storage arrangement.

Therefore, the electric golf trolley may not be switched on and operated whilst the displaceable portion is in the charging position and the charging connector is thus exposed for charging. The battery may only be charged when it is isolated from the electronics of the electric golf trolley, in particular the control unit and/or electric motor. The trolley may be powered and/or driven when the displaceable portion is in the discharging position and charging via the charging connector is substantially obstructed. Thus, importantly, movement of the displaceable portion may ensure that the battery pack may not be charged and discharged simultaneously. When the displaceable portion is in the charging position, and the charging connector is exposed for charging, the battery pack is substantially electrically disconnected from the electric golf trolley.

Therefore, the invention may provide an electric golf trolley battery pack which cannot be simultaneously charged and discharged and which may be charged whilst it is 'on board' an electric golf trolley. Reliability and safety of the electric golf trolley is therefore improved. Performance and life span of the battery is thus also improved.

This configuration is also particularly advantageous because it allows charging of the battery *'in situ',* i.e. without needing to be detached from the electric golf trolley, improving user convenience.

As used herein, the term "charging connector" refers to means configured to electrically connect the battery pack to an external charging source and permit charging of the battery.

The battery pack may be arranged to be reversibly or irreversibly mounted to the electric golf trolley, reversibly being preferred (i.e., the battery pack may preferably be removed). The battery may also be chargeable once removed.

In embodiments, the electric golf trolley may include a cooperating portion configured to operatively engage the displaceable portion during a transition from the driving or driveable arrangement to the storage arrangement and/or from the storage arrangement to the driving or driveable arrangement.

In embodiments, charging via the charging connector may be substantially obstructed by a battery pack housing in the discharging position. In embodiments, charging via the charging connector may be substantially obstructed by the displaceable portion in the discharging position.

In embodiments, the charging connector may be substantially concealed within a cavity defined by the pack housing in the discharging position.

In embodiments, the charging connector may be located on the displaceable portion. In embodiments, the charging connector is moveable with the displaceable portion relative to the pack housing. Thus, when the displaceable portion of the battery pack is displaced from the first to the second position, the charging connector may be revealed for more straightforward operation by a user.

In embodiments, in the discharging position the charging connector may be concealed within an internal cavity of the pack housing. In embodiments, in the discharging position the charging connector may be concealed within a cavity defined by an external wall of the pack housing. In other words, the cavity may be defined by a part of the pack housing which, in the absence of the displaceable portion, is open to the external environment.

In embodiments, the pack housing may include a plurality of cavities, including a first cavity for concealing the battery and a second cavity in which charging via the charging connector is obstructed when the displaceable portion is in the discharging position. In embodiments, the cavities may be substantially isolated from one another.

In embodiments, the battery pack may further comprise a discharging connector configured to connect the battery to the electric golf trolley; wherein, when the displaceable portion is in the charging position, the discharging connector is substantially electrically and mechanically disconnected from the electric golf trolley. The simultaneous charging and discharging of the battery pack is therefore further prevented because the discharging connector is substantially electrically and mechanically disconnected when the displaceable portion is in the charging position.

In embodiments, the discharging connector may be a plug or socket arranged to cooperate with a corresponding plug or socket of the electric golf trolley. In embodiments the discharging connector may include wiring or similar between the battery and a plug or socket of the battery pack.

In embodiments, the discharging connector may be located on the displaceable portion. In embodiments, both the charging connector and the discharging connector may be located on the displaceable portion. Thus, the charging connector is only exposed for charging when the discharging connector is disconnected from the electric golf trolley to which the battery pack is attached.

In embodiments, the charging connector may be located on the displaceable portion and wherein in the discharging position the displaceable portion is located predominantly inside the pack housing and in the charging position part of the displaceable portion incorporating the charging connector protrudes from the pack housing. In other words, the pack housing may comprise an internal cavity which houses the displaceable portion such that it is predominantly inside the pack housing in the discharging position. In embodiments, the pack housing may comprise an external wall which defines a cavity, and the displaceable portion may be located predominantly within the cavity in the discharging position and may protrude from the cavity in the charging position. The charging connector may thus be presented to a user when the displaceable portion is displaced to the charging position, and hidden when in the discharging position. Thus, the charging connector is easily accessible when required, and concealed and free from potential contact when in the first position.

In embodiments, the charging connector may be located on or inside the pack housing. In embodiments, the displaceable portion may be a shutter which in the discharging position substantially obstructs charging via the charging connector and in the charging position exposes the charging connector for charging.

In embodiments, the displaceable portion may be slidably engaged with the pack housing. Typically, the displaceable portion may be slidable between the discharging position and charging position and vice versa. In embodiments, the battery pack may comprise one or more bearings, hinges or the like for engagement with the displaceable portion.

In embodiments, the displaceable portion may comprise a stopper including an abutment surface which may be arranged to contact a cooperating abutment surface of the pack housing in the charging position. The stopper may be configured to prevent the displaceable portion from being entirely removed from the pack housing.

In embodiments, the displaceable portion may be arranged such that manual displacement by a user from the discharging position to the charging position may be substantially resisted and/or prevented. However, in embodiments, manual displacement by a user from the charging position to the discharging position may be permitted.

In embodiments, the battery pack may comprise a manually operable lock configured to temporarily resist and/or prevent movement of the displaceable portion between the first and second positions.

In embodiments, the battery pack may comprise a lock configured to temporarily resist and/or prevent detachment of the battery pack from the electric golf trolley.

In embodiments, the battery pack may be substantially free from any external connectors, cables or the like. In other words, the battery, charging connector and discharging connector may be substantially contained within the pack housing, or within a cavity defined by the housing, when the displaceable portion is in the discharging position.

In embodiments, the electric golf trolley may include a base having a number of wheels. In embodiments, the electric golf trolley may include a frame extending from the base and incorporating a steering handle or the like, the handle may include an actuation button or handle and/or a control unit and /or display unit.

In embodiments, the frame may incorporate a support for a golf club bag. In embodiments, the electric golf trolley may include a golf club bag. In embodiments, the golf club bag may have a number of golf club compartments. In embodiments, the golf club bag may be fixed to the frame or may be detachable therefrom.

In embodiments, the electric golf trolley may comprise an electric motor (including a plurality of motors), a transmission configured to be driven by the electric motor and a controller configured to control the movement of the electric golf trolley during use. In embodiments, the battery pack may be located at or within the base of the electric golf trolley.

In embodiments, the electric golf trolley may comprise a base which includes a foldable portion configured to allow the footprint of the base to reduce when the electric golf trolley is collapsed from its driving or driveable arrangement towards its storage arrangement. In embodiments, the electric golf trolley may comprise a set of wheels, wherein at least one wheel is located on a foldable portion of the base which is connected to the remainder of the base by a hinge.

In embodiments, the frame may include a cam having a projection; the cam being arranged such that when the frame is collapsed from the substantially expanded configuration to the substantially collapsed configuration, the projection of the cam automatically actuates a transition from the discharging configuration to the non-discharging configuration and/or from the unchargeable configuration to the chargeable configuration of the electric golf trolley.

In embodiments, the frame includes a moulded projection configured to automatically actuate a transition from the discharging configuration to the non-discharging configuration and/or from the unchargeable configuration to the chargeable configuration. In embodiments, the electric golf trolley comprises a base from which the frame extends, the frame being attached to the base by a hinge; wherein the hinge includes a moulded projection configured to automatically actuate a transition from the discharging configuration to the non-discharging configuration and/or from the unchargeable configuration to the chargeable configuration.

In embodiments, the trolley may include a latch reversibly biased towards a position in which it retains the battery pack on the electric golf trolley. Thus, the battery pack may be substantially prevented from 'jumping' out of the electric golf trolley if, for instance, the electric golf trolley traverses uneven ground, or if the electric golf trolley topples.

In embodiments, the latch may be configured to be manually operated by a user against the biased action of the latch in order to allow removal of the battery pack from the electric golf trolley.

In embodiments, the latch is spring loaded towards a position in which it retains the battery pack on the electric golf trolley.

In embodiments, the battery is connectable to the electric golf trolley by a Torberry connector, or similar. Thus, the battery pack may be straightforwardly pushed onto to the electric golf trolley to be connected thereto.

In a further aspect, the present invention provides an electric golf trolley battery pack comprising a battery concealed within a pack housing, the pack housing being arranged to attach to an electric golf trolley during use; the battery pack further comprising a displaceable portion moveable relative to the pack housing; the displaceable portion being reciprocally moveable from a discharging position in which powering of the electric golf trolley is permitted to a second non-discharging position in which powering of the electric golf trolley is substantially prevented; wherein the displaceable portion is configured to be displaced by a cooperating portion of the electric golf trolley.

Thus, the battery is automatically transitioned from a configuration in which it is configured to power an electric golf trolley to which it may be attached, to a configuration in which it is substantially prevented from powering the electric golf trolley. Thus, instructing the user to disconnect the battery may no longer be required and user convenience is improved.

In a further aspect, the present invention provides an electric golf trolley battery pack comprising a battery concealed within a pack housing, the pack housing being arranged to attach to an electric golf trolley during use; the battery pack further comprising a charging connector arranged to permit charging of the battery and a displaceable portion moveable relative to the pack housing; the displaceable portion being reciprocally moveable from a discharging position in which charging via the charging connector is substantially obstructed to a charging position in which the charging connector is substantially exposed for charging, the battery pack being arranged such that when the displaceable portion is in the charging position, the battery is substantially electrically disconnected from an electric golf trolley.

Therefore, the trolley may not be switched on and operated whilst the displaceable portion is in the charging position and the charging connector is thus exposed for charging. The battery may only be charged when it is disconnected from the electronics of the trolley to which the pack is attached. An electric golf trolley to which the battery pack is attached, in use, may only be powered when the displaceable portion is in the discharging position and charging via the charging connector is substantially obstructed. Thus, importantly, movement of the displaceable portion may ensure that the battery pack may not be charged and discharged simultaneously. When the displaceable portion is in the charging position, and the charging connector is exposed for charging, the battery pack is substantially electrically disconnected from the trolley to which it is attached.

Therefore, the invention may provide an electric golf trolley battery pack which cannot be simultaneously charged and discharged and which may be charged whilst it is 'on board' an electric golf trolley. Reliability and safety of the battery pack and hence an electric golf trolley to which it may be attached, may therefore be improved. As may be user convenience.

In embodiments, the displaceable portion may be arranged to be displaced by a cooperating portion of an electric golf trolley. Thus, displacement of the displaceable portion from the first to the second positions may be operated by part of an electric golf trolley to which the battery pack is attached. For example, the cooperating portion may be urged to interact with the displaceable portion when the electric golf trolley is folded or collapsed towards a storage arrangement and/or when the electric golf trolley is constructed towards a driving arrangement. Thus, the displaceable portion may be moved to the charging position when the electric golf trolley is collapsed towards a storage arrangement in order to disconnect the battery from the electric golf trolley and expose the charging connector ready for charging and/or moved to the discharging position when the electric golf trolley is constructed towards a driving arrangement in order to connect the battery to the electric golf trolley and substantially prevent charging of the battery via the charging connector.

In embodiments, the battery pack may be arranged to be reversibly mounted to an electric golf trolley. In other words, the battery pack may be removable from an electric golf trolley.

In embodiments, charging via the charging connector may be substantially obstructed by the pack housing in the discharging position. In embodiments, charging via the charging connector may be substantially obstructed by the displaceable portion in the discharging position.

In embodiments, the charging connector may be substantially concealed within a cavity defined by the pack housing in the discharging position.

In embodiments, the charging connector may be located on the displaceable portion, and preferably moveable therewith relative to the pack housing. Thus, when the displaceable portion of the battery pack is displaced from the first to the second position, the charging connector may be revealed for more straightforward operation by a user.

In embodiments, in the discharging position the charging connector may be concealed within an internal cavity of the pack housing. In embodiments, in the discharging position the charging connector may be concealed within a cavity defined by an external wall of the pack housing. In other words, the cavity may be defined by a part of the pack housing which, in the absence of the displaceable portion, is open to the external environment.

In embodiments, the pack housing may include a plurality of cavities, including a first cavity for concealing the battery and a second cavity in which charging via the charging connector is obstructed when the displaceable portion is in the discharging position. In embodiments, the cavities may be substantially isolated from one another.

In embodiments, the battery pack may further comprise a discharging connector arranged to connect the battery to an electric golf trolley; wherein, when the displaceable portion is in the charging position, the discharging connector is substantially electrically and mechanically disconnected from an electric golf trolley. The simultaneous charging and discharging of the battery pack is therefore further prevented because the discharging connector is substantially electrically and mechanically disconnected when the displaceable portion is in the charging position.

As used herein, the term "discharging" refers to the powering of an electric golf trolley, in particular the electric motor and/or control or display unit. As used herein, the term "discharging connector" refers to means configured to electrically connect the battery to the remainder of the electric golf trolley and provide power thereto. Typically, the discharging connector and charging connector are independent and/or separate. In embodiments, the discharging connector and charging connector are one and the same, i.e. a single connector configured to permit charging or discharging depending on the position of the displaceable portion.

In embodiments, the discharging connector may be a plug or socket arranged to cooperate with a corresponding plug or socket of an electric golf trolley. In embodiments the discharging connector may include wiring or similar between the battery and a plug or socket of the battery pack.

In embodiments, the discharging connector may be located on the displaceable portion. In embodiments, both the charging connector and the discharging connector may be located on the displaceable portion. Thus, the charging connector is only exposed for charging when the discharging connector is disconnected from the electric golf trolley to which the battery pack is attached.

In embodiments, the charging connector may be located on the displaceable portion and wherein in the discharging position the displaceable portion is located predominantly inside the pack housing and in the charging position part of the displaceable portion incorporating the charging connector protrudes from the pack housing. In other words, the pack housing may comprise an internal cavity which houses the displaceable portion such that it is predominantly inside the pack housing in the discharging position. In embodiments, the pack housing may comprise an external wall which defines a cavity, and the displaceable portion may be located predominantly within the cavity in the discharging position and may protrude from the cavity in the charging position. The charging connector may thus be presented to a user when the displaceable portion is displaced to the charging position, and hidden when in the discharging position. Thus, the charging connector is easily accessible when required, and concealed and free from potential contact when in the first position.

In embodiments, the charging connector may be located on or inside the pack housing. In embodiments, the displaceable portion may be a shutter which in the discharging position substantially obstructs charging via the charging connector and in the charging position exposes the charging connector for charging.

In embodiments, the displaceable portion may be slidably engaged with the pack housing. Typically, the displaceable portion may be slidable between the discharging position and charging position and vice versa. In embodiments, the battery pack may comprise one or more bearings, hinges or the like for engagement with the displaceable portion.

In embodiments, the displaceable portion may comprise a stopper including an abutment surface which may be arranged to contact a cooperating abutment surface of the pack housing in the charging position. The stopper may be configured to prevent the displaceable portion from being entirely removed from the pack housing.

In embodiments, the battery pack may be arranged to be attached to an electric golf trolley which is reversibly collapsible from a driving or driveable arrangement to a storage (undriveable) arrangement; the displaceable portion being arranged to be displaced towards its charging configuration by a cooperating portion of the electric golf trolley as the electric golf trolley is collapsed from its driving or driveable arrangement towards its storage arrangement and/or returned to its discharging configuration by a cooperating portion of the electric golf trolley as the electric golf trolley is expanded from its storage arrangement towards its driving or driveable arrangement. Therefore, when an electric golf trolley is folded or collapsed ready for storage following use, the charging connector may be helpfully exposed for charging via that folding motion. Because the battery should only be charged when the trolley is not in use, providing a charging connector which is only exposed for charging when the trolley is folded is advantageous and provides a more reliable and a safer battery pack.

In embodiments, the displaceable portion may be arranged such that manual displacement by a user from the first position to the second position is substantially resisted and/or prevented when the battery pack is attached to an electric golf trolley and in a driveable configuration. In other words, the displaceable portion may only be displaceable between the first and second positions by a cooperating portion of a golf trolley. Thus, a user may be substantially prevented from attempting to charge the battery pack whilst the golf trolley is driveable.

In embodiments, the displaceable portion may be arranged such that manual displacement by a user from the second position to the first position is permitted. For example, the displaceable portion may be arranged such that a user may push the displaceable portion from the second position to the first position. However, in embodiments, the battery pack may be arranged such that it substantially prevents or resists the user placing the electric golf trolley in a discharging configuration when in a storage arrangement.

In embodiments, the battery pack may be substantially free from any external connectors, cables or the like. In other words, the battery, charging connector and discharging connector may be substantially contained within the pack housing, or within a cavity defined by the housing, when the displaceable portion is in the discharging position.

In embodiments, the battery pack may comprise a lock configured to temporarily resist and/or prevent movement of the displaceable portion between the first and second positions. In embodiments, the lock may include a manually operable switch which is moveable between a first locked position, wherein the displaceable portion is non-displaceable, i.e. prevented from being displaced between the discharging position and charging position, and a second unlocked position, wherein displacement of the displaceable portion between the discharging position and the charging position is permitted. In embodiments, the lock may be configured to be operable by the hand and/or foot of a user. In embodiments, the lock may be located on an outwardly facing surface of the pack housing. In embodiments, the lock may be located towards or adjacent to the displaceable portion.

In a further aspect, the invention provides a kit comprising an electric golf trolley battery pack according to any preceding aspect and a charger arranged to connect the battery of the battery pack to an external power source, for instance a plug-in charger for mains connection.

In a further aspect, the present invention provides an electric golf trolley comprising a battery pack in accordance with any of the preceding aspects.

In a further aspect, the present invention provides a method of storing an electric golf trolley, comprising the steps of:
a. providing an electric golf trolley according to any preceding aspect;
b. arranging the electric golf trolley in a storage arrangement; and
c. optionally charging the electric golf trolley in the storage arrangement.

In embodiments, the method may comprise the step of unfolding the electric golf trolley from a substantially folded configuration and, optionally, charging the electric golf trolley in the unfolded configuration.

For the avoidance of doubt, features of aspects and embodiments described herein may be combined, and still fall within the scope of the present invention.

### Brief Description of Figures

Preferred features of the present invention will now be described, by way of example, with reference to the accompanying drawings, in which:
Figure 1 shows a part cutaway view of an electric golf trolley according to the present invention.
Figures 2a, 2b and 2c show a base, a moveable portion of the frame and switch according to the present invention.
Figures 3a, 3b and 3c show a base, a moveable portion of the frame and switch according to the present invention.
Figure 4a shows a base including a battery pack retaining latch with a battery pack absent.
Figure 4b shows a base including a battery pack retaining latch with a battery pack present.
Figure 5 shows a perspective view of a battery pack according to the present invention.
Figure 6 shows a perspective view of the battery pack of Figure 5 with a displaceable portion in a second position.
Figure 7 shows a side view of a battery pack according to the present invention.
Figure 8 shows a side view of the battery pack of Figure 7 with a displaceable portion in a second position.
Figure 9 shows a perspective view of a battery pack according to the present invention.
Figure 10 shows a perspective exploded view of a battery pack according to the present invention.
Figure 11 shows a front on view of a battery pack according to the present invention.

### Detailed Description

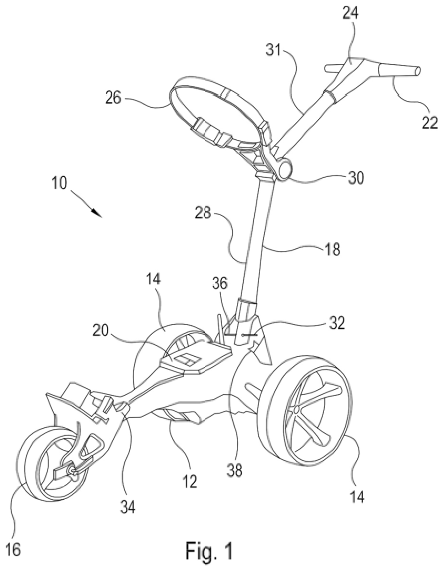

Figure 1 shows an electric golf trolley 10 according to the present invention. The golf trolley comprises a base 12, two rear wheels 14, a front wheel 16, and a frame 18. The electric golf trolley 10 is driven by a motor (not shown), which is powered by a battery housed in a battery pack 20. The battery pack 20 is detachable from the electric golf trolley 10 so that it may be straightforwardly replaced or charged away from the electric golf trolley 10.

The frame 18 comprises a handlebar 22 including a controller 24 which allows a user to control, including steer, the electric golf trolley 10 in use. The frame 18 also includes a support 26 for attachment to a separate golf bag (not shown).

The electric golf trolley 10 is configured such that its battery may not be simultaneously charged and discharged when the battery is *in situ.* As explained in greater detail below, the electric golf trolley 10 may be automatically transitioned, via an alternative user-initiated transition, between a discharging configuration and a non-discharging configuration, and simultaneously between an unchargeable configuration and a chargeable configuration.

In the discharging configuration, powering of the electric golf trolley 10 by the battery is permitted. In the non-discharging configuration, powering of the electric golf trolley 10 by the battery is substantially prevented.

In the chargeable configuration, charging of the battery is permitted. In the unchargeable configuration, charging of the battery is substantially prevented.

The electric golf trolley 10 is foldable between a driving arrangement (shown in Figure 1) in which it is driven by a user, and a storage arrangement. In the driving arrangement the electric golf trolley 10 is relatively upright and unfolded, and in the storage arrangement the electric golf trolley 10 is relatively collapsed and folded. The electric golf trolley 10 is configured to be manually transitioned from the driving arrangement to the storage arrangement through several intermediate folding steps, and vice versa.

The electric golf trolley 10 is configured such that a portion of the frame 28 moves relative to another part of the electric golf trolley 10, e.g. another portion of the frame 30 and/or the base 12 when the trolley 10 transitions from the driving arrangement to the storage arrangement and vice versa.

More specifically, in the embodiment of Figure 1, the electric golf trolley 10 includes several hinges 30, 32 which allow parts of the frame 18 to fold relative to one another and which allow the frame 18 to fold relative to the base 12.

A first hinge 30 allows an upper portion 31 of the frame 18 to fold relative to a lower portion 28 of the frame 18. A second hinge 32 allows the lower frame portion 28 to fold relative to the base 12, so that the folded electric golf trolley 10 has a substantially concertinaed configuration in the storage arrangement. A further hinge 34 allows the front wheel 16 of the trolley be folded underneath the base 12 in the storage arrangement.

The lower frame portion 28 is attached to a shaft 36 about which the lower frame portion 28 rotates during a transition from the driving arrangement to the storage arrangement, and vice versa.

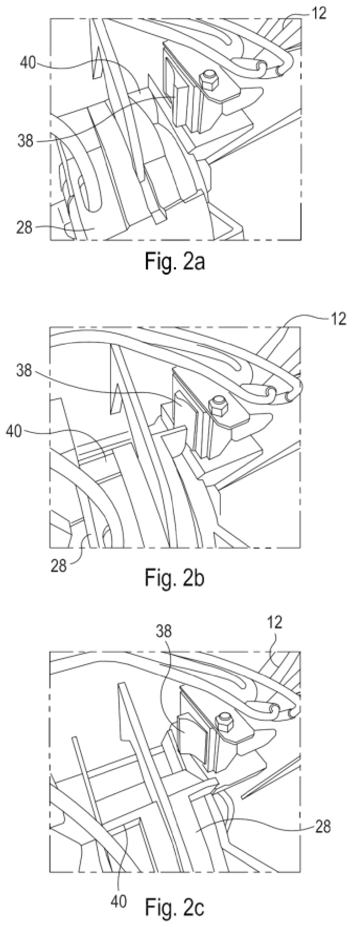

Referring still to Figure 1 and to Figures 2a to 2c, a switch 38 is arranged on an interior surface of the base 12, and the switch 38 is proximal to an end of the lower frame portion 28. The switch 38 is concealed from a user and so may not be directly manually actuated.

The switch 38 is configured to transition the electric golf trolley 10 between the discharging configuration and the non-discharging configuration, and simultaneously between the unchargeable configuration and the chargeable configuration.

In another embodiment, which is not shown, a displaceable portion is provided in additional to or instead of a switch 38, and the displaceable portion is configured to transition the electric golf trolley 10 between the discharging configuration and the non-discharging configuration, and simultaneously between the unchargeable configuration and the chargeable configuration. The displaceable portion may be arranged to be automatically displaced from a discharging position to a charging position through folding of the electric golf trolley 10, and may be arranged to be automatically displaced from the charging position to the discharging position through unfolding of the electric golf trolley.

Referring back to Figure 1, the switch 38 is configured to automatically transition the electric golf trolley 10 from the discharging and unchargeable configurations to the non-discharging and chargeable configurations during a transition from the driving or driveable arrangement to the storage arrangement, i.e. folding the electric golf trolley, and vice versa. Alternatively, the electric golf trolley may be arranged to remain in the non-discharging and chargeable configurations during and following subsequent transition from the storage arrangement to the driveable arrangement, e.g. unfolding of the electric golf trolley.

In the electric golf trolley 10 of Figure 1, the switch 38 is a multi-pole, multi-throw switch. In other words, the switch 38 is configured to open / close more than one circuit over several contact positions of the switch. In the embodiment of Figures 1 and 2, the switch 38 is a three position non-latching rocker switch.

The lower frame portion 28 includes a moulded projection 40 (shown in Figures 2a to 2c), which contacts the switch 38 to actuate it. The lower frame portion 28 and the switch 38 are arranged such that the moulded projection 40 of the lower frame portion 28 slides over a contact surface of the switch 38 during a transition between the driving arrangement and the storage arrangement.

Referring to Figure 2a, in a first position of the switch 38, which is the position of the switch in the driving arrangement, the switch 38 triggers the discharging and unchargeable configurations of the electric golf trolley 10. In other words, in the first position of the switch 38 the electrical connection between the battery and the powerable parts, e.g. control unit and/or motor, of the electric golf trolley is intact, but the electrical connection between a charging port for the battery and the battery is broken.

As the trolley is folded towards the storage arrangement, as shown in Figure 2b, the moulded projection 40 of the lower frame portion 28 slides over the contact surface of the switch 38 such that it rocks the switch 38 to an intermediate position.

In the intermediate position, neither the discharging configuration nor the non-discharging configuration are active, and neither the unchargeable configuration nor the chargeable configuration are active. In other words, in the intermediate position of the switch 38 powering of the electric golf trolley 10 is substantially prevented, and so is charging of the battery.

Referring to Figure 2c, as folding of the electric golf trolley 10 towards the storage arrangement continues, the moulded projection 40 of the lower frame portion 28 continues to slide over the contact surface of the switch 38 such that it rocks the switch 38 to a second position in the storage arrangement.

In the second position, the switch 38 triggers the non-discharging and chargeable configurations of the electric golf trolley 10. In other words, in the first position of the switch 38 the electrical connection between the battery and the powerable parts, e.g. control unit and/or motor, of the electric golf trolley is broken, but the electrical connection between a charging port for the battery and the battery is complete, allowing charging of the battery while powering of the trolley 10 is prevented.

The electric golf trolley 10 is thus configured such that during a transition from the driving arrangement to the storage arrangement, movement of the lower frame portion 28 automatically actuates a transition from a discharging configuration to a non-discharging configuration of the electric golf trolley 10. Similarly, during a transition from the storage arrangement to the driving arrangement, movement of the lower frame portion 28 automatically actuates a transition from the non-discharging configuration to the discharging configuration.

Also, the electric golf trolley 10 is configured such that during a transition from the driving arrangement to the storage arrangement, movement of the frame portion 28 automatically actuates a transition from an unchargeable configuration to a chargeable configuration of the electric golf trolley 10. Similarly, during a transition from the storage arrangement to the driving arrangement, movement of the frame portion 28 automatically actuates a transition from the chargeable configuration to the unchargeable configuration.

Thus, automatic simultaneous transition between the discharging and non-discharging configurations and the chargeable and unchargeable configurations is associated with folding and/or unfolding the trolley which causes the frame portion 28 to move. A transition between the discharging and non-discharging configurations, and between the chargeable and unchargeable configurations is achieved via a separate user-initiated action, namely folding and unfolding the electric golf trolley 10.

When the electric golf trolley 10 is in the driving arrangement, it is also automatically in both the discharging and unchargeable configurations and, conversely, when the electric golf trolley 10 is in the storage arrangement, it is also automatically in both the non-discharging and chargeable configurations.

Therefore, in the driving arrangement the electric golf trolley 10 is powered by the battery and simultaneous charging of the battery is prevented, and in the storage arrangement charging of the battery is permitted while simultaneous powering of the electric golf trolley 10 is prevented. Thus, while the battery is removable, it does not need to be removed from the electric golf trolley 10 for charging, or for the electric golf trolley 10 to be in the non-discharging configuration or the chargeable configuration. A charging port (not shown) is provided on an outer surface of the base 12 or the battery pack 20 to facilitate charging of the battery *in situ.*

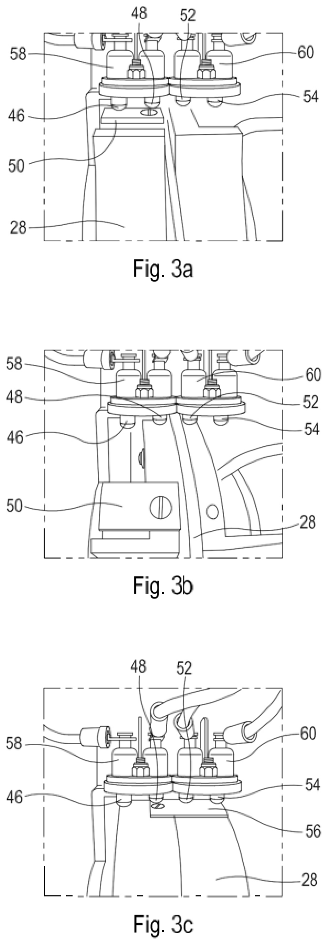

Figures 3a, 3b and 3c show another embodiment of the present invention in which the switch 38 comprises two sets of electrical contacts comprising electrically conductive material.

The sets of electrical contacts are cooperatively arranged on both the lower frame portion 28 and the base 12. When a set of electrical contacts is brought into contact or close proximity, via movement of the lower frame portion 28, together the electrical contacts complete one or more circuits to transition the electric golf trolley 10 from the discharging configuration to the non-discharging configuration, and vice versa, and from the unchargeable configuration to the chargeable configuration and vice versa.

When the electric golf trolley 10 is in the driving arrangement, a set of contacts defining a discharging circuit are in contact and the discharging circuit is thus complete, i.e. closed, so that the trolley 10 may be powered by the battery. When the electric golf trolley 10 is in the storage arrangement, a set of contacts defining a charging circuit are in contact and the charging circuit is thus complete, i.e. closed, so that the battery may be charged. The sets of electric contacts are arranged such that when one of the discharging circuit and the charging circuit is complete, the other is not (i.e. the other circuit is broken).

More specifically, the discharging circuit comprises a set of contacts in the form of two brass pins 46, 48 arranged on the base and a brass strip 50 arranged on the lower frame portion 28. The brass strip 50 is arranged such that when the electric golf trolley 10 is in the driving arrangement (and the lower frame portion 28 is thus in a relatively upright position relative to the base 12), the strip 50 is in contact with or in close proximity to both brass pins 46, 48 to complete the discharging circuit therebetween. Figure 3a shows the contacts associated with the discharging circuit being in contact when the electric golf trolley 10 is in the driving arrangement.

The charging circuit also comprises a set of contacts in the form of two brass pins 52, 54 arranged on the base 12 and a brass strip 56 (see Figure 3c) arranged on the lower frame portion 28. The brass strip 56 of the charging circuit is arranged such that in the driving arrangement, it is not in contact or in close proximity to the brass pins 52, 54 of the charging circuit. The charging circuit is thus broken, i.e. open, in the driving arrangement because an electrical connection is not made between contacts 52, 54 and 56.

Referring to Figure 3b, as the lower frame portion 28 is rotated and folded relative to the base 12 during a transition from the driving arrangement to the storage arrangement of the electric golf trolley 10, the brass strip 50 of the discharging circuit breaks contact with the brass pins 46, 48 and the discharging circuit is thus opened and powering of the trolley 10 by the battery is prevented. In this transitional arrangement between the driving arrangement and the storage arrangement, both the discharging circuit and the charging circuit are broken, i.e. open.

As the lower frame portion 28 continues to be rotated and folded relative to the base 12, the brass strip 56 of the charging circuit comes into contact with the corresponding brass pins 52, 54 to complete, i.e. close, the charging circuit and thus permit charging of the battery. In this arrangement, the discharging circuit is broken, i.e. open, and so powering of the electric golf trolley 10 is prevented whilst the charging circuit is complete.

The arrangement of the brass strips 50, 56 on different parts of a surface of the lower frame portion 28 prevents simultaneous closing of the discharging circuit and the charging circuit.

The brass pins 46, 48, 52, 54 are each spring loaded and are housed within a pin housing 58, 60. Electric wiring extends from the pin housing 58 of the discharging circuit to provide an electrical connection between the battery and the powerable components of the electric golf trolley 10. Electric wiring extends from the pin housing 60 of the charging circuit to provide an electrical connection between the battery and a battery charging port.

The battery pack 20 is a cableless battery pack and the electric golf trolley 10 has a battery pack housing for holding the battery pack in use. The battery is connected to the electric golf trolley 10 via a connector, for example a Torberry connector. The connector and the charging port are ideally both cushioned or spring loaded to minimise the risk of damage to the electric golf trolley 10, including the batter pack 20, due to misalignment or inappropriate force applied by a user.

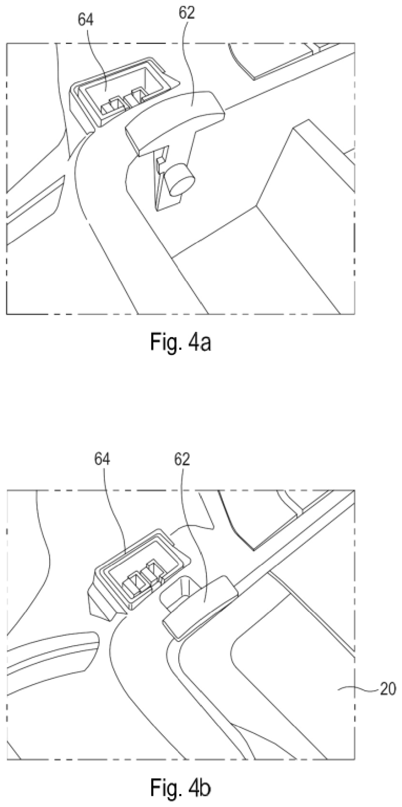

Referring to Figures 4a and 4b, the electric golf trolley 10 further comprises a spring-loaded, T-shaped latch 62 for retaining the battery pack 20 within a battery pack housing. The electric golf trolley 10 includes the latch 62 to prevent or minimise the risk of the battery pack 20 becoming detached from the electric golf trolley 10 when the trolley traverses uneven ground or when a user folds / unfolds the trolley between the driving or driveable and storage arrangements. The latch 62 is configured so that as the battery pack 20 is inserted into the battery pack housing, the latch is urged towards the battery pack 20 under the action of a spring to secure the battery pack 20 in place. If a user wishes to remove the battery pack 20, the latch 62 is configured to be manually pushed away from the battery pack 20, against the force of the spring, to release the battery pack 20.

A charging port 64 is provided on an outwardly facing surface of the electric golf trolley 10 so that a charging cable from a separate power source may be connected to the electric golf trolley 10 while the battery pack 20 is *in situ.*

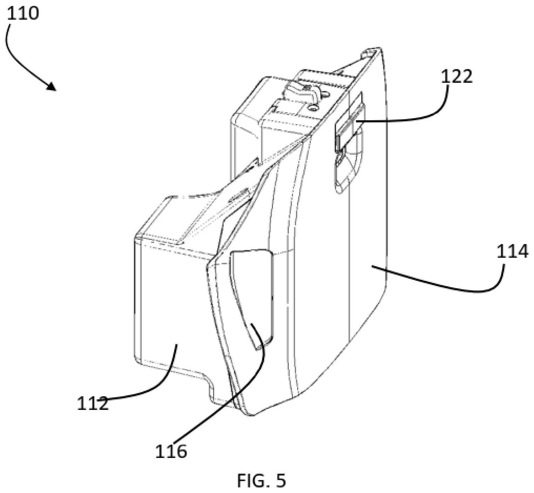

Figure 5 shows a battery pack 110 according to the present invention. The battery pack 110 is arranged to be reversibly attached, i.e. detachably mounted, to an electric golf trolley (not shown) in order to power the electric golf trolley in use. Also, the battery pack 110 is configured such that the battery may not be simultaneously charged and discharged.

The illustrated battery pack 110 is configured such that movement of a displaceable portion 122 dictates whether the electric golf trolley to which it is attached is in a discharging configuration or a non-discharging configuration, and/or whether the electric golf trolley is in an unchargeable configuration or a chargeable configuration. The displaceable portion 122 of Figure 5 dictates whether the battery pack 110 is in a configuration in which it may be charged or a configuration in which it may be discharged, but not both.

Furthermore, the battery pack 110 is suitable for attaching to an electric golf trolley which is reversibly collapsible between a driveable arrangement (e.g. an expanded state in which it is driveable by an electric motor) and a storage arrangement (e.g. a collapsed state in which is it substantially undriveable).

The illustrated battery pack 110 comprises a battery (not shown) having a replenishable energy store. Typically, the battery is a lithium-based battery. However, other battery types and compositions are also envisaged and will be known to the skilled person.

The battery is housed and concealed within a battery pack housing 112. The pack housing may be formed of a combination of portions of plastic and/or metal and/or composite materials. However, other suitable materials are envisaged and will be known to the skilled person. The battery pack housing 112 is arranged to attach to an electric golf trolley during use.

An outwardly facing surface 114 of the pack housing 112 is configured to substantially match and/or blend into the shape of the electric golf trolley to which it is attachable. Advantageously, the pack 110 may have a complimentary shape and/or does not obstruct use of the trolley. Handles 116 and 118 are provided on the outwardly facing surface 114 to facilitate removal (and insertion) of the battery pack 110 from (into) an electric golf trolley.

The battery pack 110 further comprises a charging connector 120 which is arranged to permit charging of the battery. Typically, the charging connector 120 is an Anderson ^{™} or Torberry^{™} connector, but other connector types are envisages and will be known to the skilled person.

The charging connector 120 is located on a displaceable portion 122 of the battery pack 110. The displaceable portion 122 is displaceable between a discharging position wherein charging via the charging connector 120 is substantially obstructed. In the illustrated battery pack, the charging connector 120 is concealed within the housing in the discharging position. The displaceable portion 122 is moveable between the discharging position and a charging position wherein the charging connector 120 is substantially exposed for charging. In Figure 5, the displaceable portion 122 is in the discharging position and the charging connector 120 is concealed within a cavity defined by the housing and inaccessible to a user. In use, the displaceable portion 122 is in the discharging position when the electric golf trolley to which the battery pack 110 is attached is powered and being used. Therefore, whilst the electric golf trolley is powered and in the driving arrangement, the charging connector 120 is inaccessible so that a user may not charge the battery whilst it is powering the trolley.

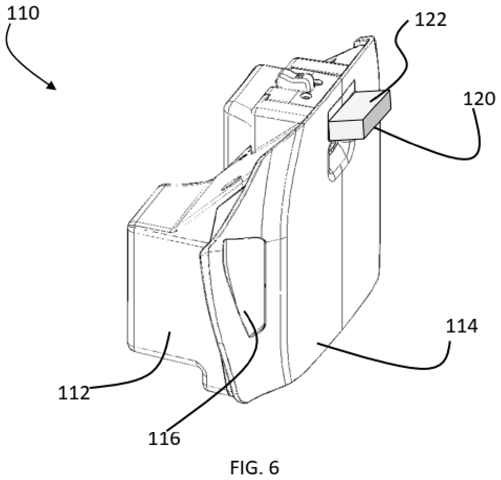

As discussed, and referring now to Figure 6, the displaceable portion 122 is displaceable to a charging position in which the charging connector 120 is substantially exposed for charging. In the charging position, the electric golf trolley is in a non-discharging configuration and simultaneously in a charging configuration.

When the displaceable portion 122 is in the charging position, the charging connector 120 may be utilised by a user to charge the battery. The charging connector 120 is located on the displaceable portion 122 and the part of the displaceable portion having the charging connector 120 protrudes from the pack housing 112 in the charging position. The charging connector 120 is located on a bottom surface 134 of the displaceable portion 122.

The battery pack 110 is arranged such that, in the discharging position, as shown in Figure 5, the battery is electrically connected to an electric golf trolley (when the battery pack 110 is attached thereto) but is not able to be charged because the charging connector 120 is concealed within the housing. In the charging position, as shown in Figure 6, the charging connector 120 is exposed to permit charging of the battery but the battery is electrically disconnected from the trolley to which it is attached.

The displaceable portion 122 comprises both the charging connector 120 and discharging connector for completing the discharging circuit between the battery and the electric golf trolley to which the battery pack 110 is attached. Therefore, when the displaceable portion 122 is in the discharging position, the discharging connector is connected and permits discharging of the battery, but charging of the battery is not permitted because the charging connector 120 is not accessible. In the charging position, the charging connector 120 is accessible and permits charging of the battery, but the discharging circuit between the battery and the electric golf trolley is disconnected and thus does not permit powering of the trolley. Importantly, therefore, simultaneous charging and discharging of the battery is not permitted. Because both the charging connector and part of the discharging circuitry are located on the displaceable portion 122, the discharging circuitry is electrically and physically disconnected when the charging connector 120 is exposed. Thus, the battery is electrically and mechanically disconnected from the electric golf trolley when the displaceable portion 122 is in the charging position.

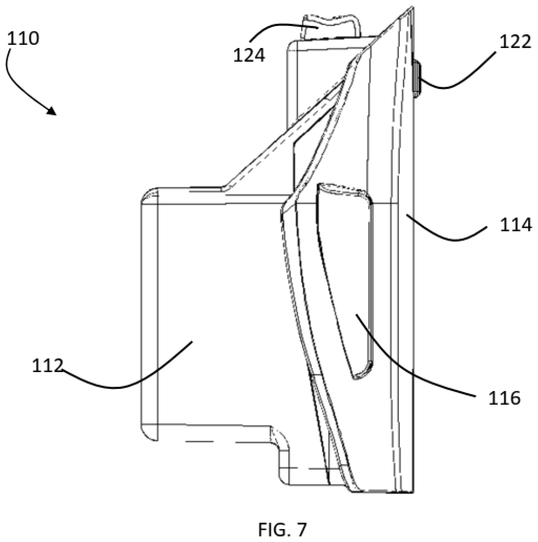

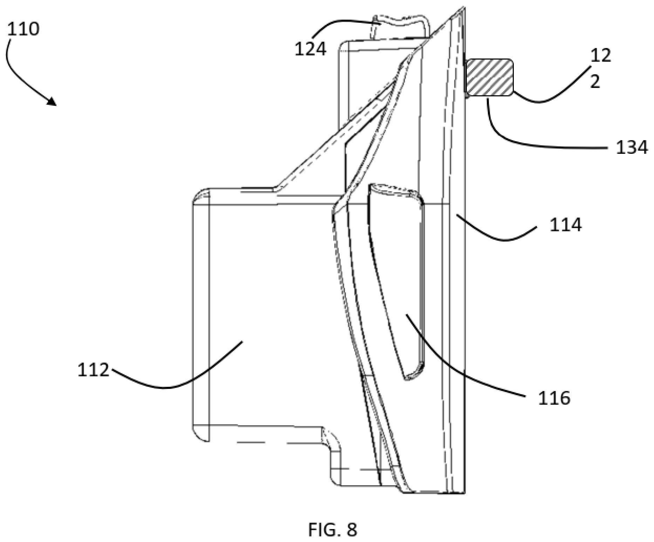

As discussed, and as shown clearly in Figures 7 and 8, the displaceable portion 122 is located inside a cavity defined by the pack housing 112 when in the first position and the part of the displaceable portion comprising the charging connector 120 is located outside the pack housing 112 when in the second position. A protrusion 124 is provided to allow manual movement of the displaceable portion 122 between the discharging and charging positions when the battery pack 110 is not attached to an electric golf trolley. The protrusion 124 is also configured to be operatively engaged by a cooperating portion of an electric golf trolley to displace the displaceable portion 122 from the discharging configuration to the charging configuration.

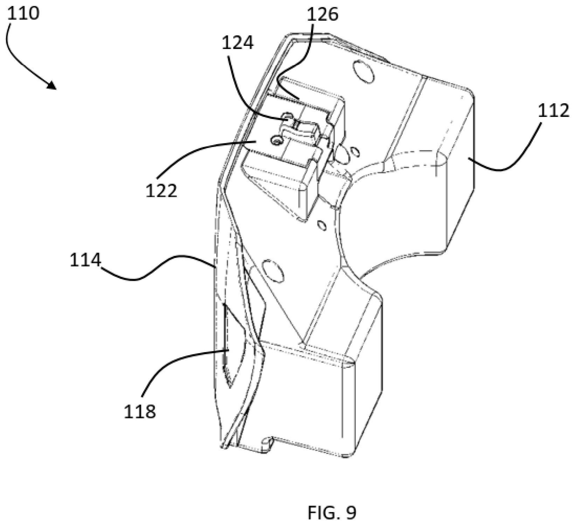

Referring to Figure 9, it can be seen that the displaceable portion 122 resides in a cavity 126 formed by the pack housing 112 in the discharging position. The displaceable portion 122 is slidably engaged with the pack housing 112 and is slidable between the first and second positions.

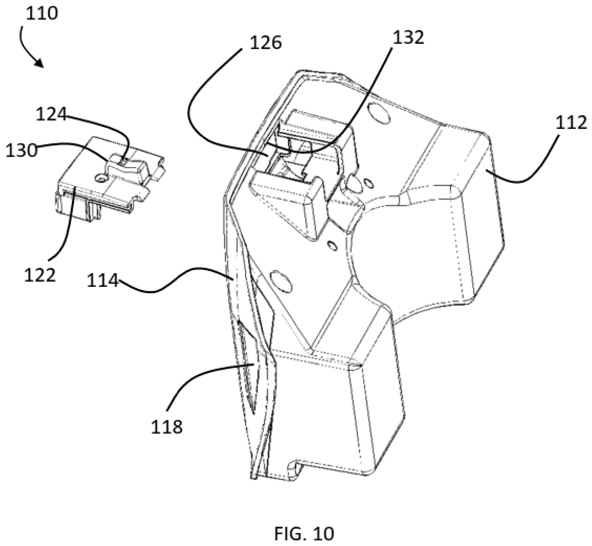

Figure 10 shows the battery pack 110 in an exploded view. The cavity 126 is formed by a wall of the pack housing and the displaceable portion 122 is located predominantly within this cavity in the discharging position.

The displaceable portion 122 is arranged to be displaced by a cooperating portion (not shown) of an electric golf trolley to which it is attached, in use. For example, an electric golf trolley may comprise a cam having a protrusion (not shown) which actuates displacement of the displaceable portion 122 when the electric golf trolley transitions from a driving arrangement to a storage arrangement.

Therefore, when the electric golf trolley transitions from a driving arrangement towards a storage arrangement, the electric golf trolley actuates displacement of the displaceable portion 122 to automatically transition the electric golf trolley from a discharging configuration to a non-discharging configuration and simultaneously from an unchargeable configuration to a chargeable configuration.

An electric golf trolley to which the battery pack 110 is attached, in use, may be a reversibly collapsible golf trolley. The electric golf trolley may be collapsible from a driving arrangement, i.e. a state in which it is typically used and driveable as a golf trolley, and a storage arrangement, i.e. a state in which it is typically undriveable and typically collapsed and more compact to permit more straightforward storage between uses. The displaceable portion 122 is arranged to be displaced by a cooperating portion of a reversibly collapsible electric golf trolley when the trolley is substantially collapsed from its driving arrangement towards its storage arrangement. Therefore, when such an electric golf trolley is collapsed towards its storage arrangement, the displaceable portion 122 is moved from its discharging position towards its charging position, thereby allowing the battery to be charged only when the electric golf trolley is in a storage arrangement and is thus not being powered.

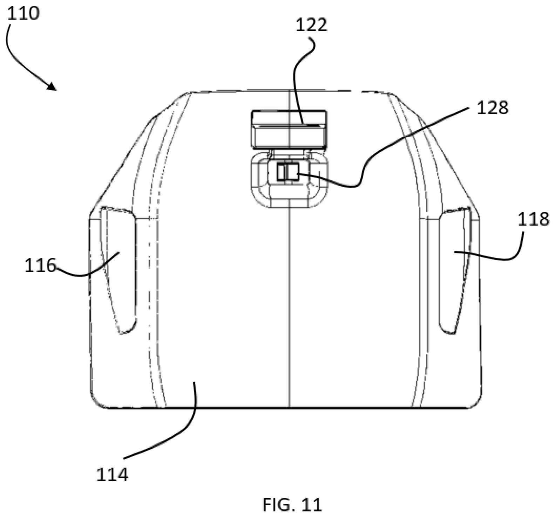

Referring to Figure 11, a lock 128 is provided for temporarily preventing or resisting detachment of the battery pack 110 from the electric trolley. The lock 128 may be utilised when, for example, the electric golf trolley is being used over uneven ground and the displaceable portion 122 may otherwise inadvertently disconnect the battery from the electric golf trolley.

The lock 128 is located at a recessed portion of the outwardly facing surface 114 of the battery pack 110 to minimise the risk of accidental actuation of the lock 128.

As discussed, and shown in Figure 11, handles 116, 118 are provided for intuitive insertion and removal of the battery pack 110 from an electric golf trolley. The illustrated battery pack 110, comprises two the handles 116, 118 which are in the form of two cut out portions which are cut out from the outwardly facing surface 114 of the pack 110.

It will be appreciated that various modifications may be made to the embodiments shown without departing from the spirit and scope of the invention as defined by the accompanying claims.

### Clauses of the Invention

1. An electric golf trolley including a battery for powering the trolley;
   the electric golf trolley having a discharging configuration in which the electric golf trolley may be powered by the battery, and a non-discharging configuration in which powering of the electric golf trolley by the battery is substantially prevented;
   the electric golf trolley being further configured to transition from a driving arrangement to a storage arrangement;
   wherein during a transition from the driving arrangement to the storage arrangement the electric golf trolley automatically transitions from the discharging configuration to a non-discharging configuration,
      and/or
   wherein during a transition from the storage arrangement to the driving arrangement the electric golf trolley automatically transitions from the non-discharging configuration to a discharging configuration.
2. The electric golf trolley according to clause 1, wherein in the discharging configuration charging of the battery is substantially prevented.
3. The electric golf trolley according to clause 1 or clause 2, wherein in the non-discharging configuration charging of the battery is permitted.
4. The electric golf trolley according to any preceding clause, wherein the automatic transition from the discharging configuration to the non-discharging configuration is associated with folding the electric golf trolley or part thereof, and/or
   the automatic transition from the non-discharging configuration to the discharging configuration is associated with unfolding the electric golf trolley or part thereof.
5. An electric golf trolley including a battery for powering the electric golf trolley;
   the electric golf trolley having a chargeable configuration in which charging of the battery is permitted, and an unchargeable configuration in which charging of the battery is substantially prevented;
   the electric golf trolley further being configured to transition between a driving arrangement and a storage arrangement;
   wherein during a transition from the driving arrangement to the storage arrangement the electric golf trolley automatically transitions from an unchargeable configuration to a chargeable configuration,
      and/or
   wherein during the transition from the storage arrangement to the driving arrangement the electric golf trolley automatically transitions from a chargeable configuration to an unchargeable configuration.
6. The electric golf trolley of clause 5, wherein in the chargeable configuration powering of the electric golf trolley is substantially prevented.
7. The electric golf trolley of clause 5 or clause 6, wherein in the unchargeable configuration powering of the electric golf trolley is permitted.
8. The electric golf trolley of any of clauses 5 to 7, wherein the automatic transition from the unchargeable configuration to the chargeable configuration being associated with folding the electric golf trolley or part thereof, and/or
   the automatic transition from the chargeable configuration to the unchargeable configuration being associated with unfolding the electric golf trolley or part thereof.
9. The electric golf trolley of clause 4 or clause 8, wherein folding the electric golf trolley automatically transitions the electric golf trolley from the discharging configuration and/or unchargeable configuration to the non-discharging configuration and/or chargeable configuration; and the electric golf trolley is arranged to remain in the non-discharging configuration and/or chargeable configuration during and following subsequent unfolding of the electric golf trolley.
10. The electric golf trolley according to any preceding clause, comprising a base and a frame, the frame including at least one moveable portion; wherein the or each moveable portion of the frame is reversibly foldable relative to the base during the transition from the driving or a driveable arrangement to the storage arrangement; wherein folding the or each moveable portion of the frame relative to the base automatically transitions the electric golf trolley from the discharging configuration to the non-discharging configuration and/or from the unchargeable configuration to the chargeable configuration; and/or
   wherein unfolding the or each moveable portion of the frame relative to the base automatically transitions the electric golf trolley from the non-discharging configuration to the discharging configuration and/or from the chargeable configuration to the unchargeable configuration.
11.The electric golf trolley according to clause 10, including a switch configured to transition the electric golf trolley between the discharging configuration and the non-discharging configuration and/or between the unchargeable configuration and the chargeable configuration; wherein the switch is configured to be actuated through movement of a first said moveable portion of the frame.
12.The electric golf trolley according to clause 11, wherein the first said moveable portion of the frame is attached to the base by a hinge and at least part of the switch is arranged on the base proximal to the hinge; and wherein the first said moveable portion of the frame includes means to operatively engage the switch during the transition from the driving or a driveable arrangement to the storage arrangement and, optionally, vice versa.
13. The electric golf trolley according to clause 11 or clause 12, wherein the switch is a rocker switch; and the first said moveable portion of the frame includes a projection configured to engage the rocker switch during the transition from the driving or a driveable arrangement to the storage arrangement and, optionally, vice versa.
14. The electric golf trolley according to clause 11 or clause 12, wherein the switch comprises one or more sets of contacts comprising electrically conductive material; wherein the or each set of contacts is arranged such that when the electric golf trolley is in the driving arrangement a discharging circuit is complete and/or a charging circuit is broken; and when the electric golf trolley is in the storage arrangement the charging circuit is complete and/or the discharging circuit is broken.
15. The electric golf trolley according to any preceding clause, including a displaceable portion which is reciprocally displaceable from a discharging position in which the electric golf trolley may be powered by the battery and charging of the battery is substantially prevented, to a charging position in which charging of the battery is permitted and the battery is substantially electrically disconnected from the electric golf trolley; wherein the displaceable portion is configured to be automatically displaced from the discharging position to the charging position through folding of the electric golf trolley and/or the displaceable portion is configured to be automatically displaced from the charging position to the discharging position through unfolding of the electric golf trolley.
16. The electric golf trolley according to clause 15, wherein the displaceable portion is configured to be displaced from the discharging position to the charging position through folding of the electric golf trolley; and wherein the displaceable portion is configured to remain in the charging position during and following a subsequent unfolding of the electric golf trolley.
17.The electric golf trolley according to any preceding clause, wherein the battery is provided in a battery pack and concealed within a battery pack housing,
   the battery pack comprising a charging connector arranged to permit charging of the battery;
   and a displaceable portion movable relative to the pack housing;
   the displaceable portion of the battery pack being reciprocally moveable from a discharging position in which charging via the charging connector is substantially obstructed, to a charging position in which the charging connector is substantially exposed for charging;
   the battery pack being arranged such that when the displaceable portion of the battery pack is in the charging position, the battery is substantially electrically disconnected from the electric golf trolley.
18.The electric golf trolley according to clause 17, wherein the electric golf trolley includes a cooperating portion configured to operatively engage the displaceable portion of the battery pack during a transition from a driving or a driveable arrangement to a storage arrangement and/or from the storage arrangement to a driveable or driving arrangement.
19. The electric golf trolley according to any preceding clause, comprising a battery charging port arranged at an external surface of the golf trolley
20.The electric golf trolley according to any preceding clause, comprising a removable battery pack including the battery; wherein the trolley further comprises a latch reversibly biased towards a position in which it retains the battery pack on the electric golf trolley.
21.An electric golf trolley battery pack comprising
   a battery concealed within a pack housing, the pack housing being arranged to attach to an electric golf trolley during use;
   the battery pack further comprising a displaceable portion moveable relative to the pack housing;
   the displaceable portion being reciprocally moveable from a discharging position in which powering of the electric golf trolley is permitted to a second non-discharging position in which powering of the electric golf trolley is substantially prevented;
   wherein the displaceable portion is configured to be displaced by a cooperating portion of the electric golf trolley.
22.An electric golf trolley battery pack comprising
   a battery concealed within a pack housing, the pack housing being arranged to attach to an electric golf trolley during use;
   the battery pack further comprising
   a charging connector arranged to permit charging of the battery and a displaceable portion moveable relative to the pack housing;
   the displaceable portion being reciprocally moveable from a discharging position in which charging via the charging connector is substantially obstructed to a charging position in which the charging connector is substantially exposed for charging,
   the battery pack being arranged such that when the displaceable portion is in the charging position, the battery is substantially electrically disconnected from an electric golf trolley.
23. The electric golf trolley battery pack of clause 22, the displaceable portion being arranged to be displaced by a cooperating portion of an electric golf trolley.
24.An electric golf trolley comprising a battery pack in accordance with any of clauses 21 to 23.
25.A method of storing an electric golf trolley, comprising the steps of:
   a. providing an electric golf trolley according to any of clauses 1 to 20 or clause 24;
   b. arranging the electric golf trolley in a storage arrangement; and
   c. optionally charging the electric golf trolley in the storage arrangement.

### Further Clauses of the Invention

1. An electric golf trolley including a battery for powering the electric golf trolley;
   the electric golf trolley having a chargeable configuration in which charging of the battery is permitted, and an unchargeable configuration in which charging of the battery is substantially prevented;
   the electric golf trolley further being configured to transition between a driving arrangement and a storage arrangement;
   wherein during a transition from the driving arrangement to the storage arrangement the electric golf trolley automatically transitions from an unchargeable configuration to a chargeable configuration,
      and/or
   wherein during the transition from the storage arrangement to the driving arrangement the electric golf trolley automatically transitions from a chargeable configuration to an unchargeable configuration.
2. The electric golf trolley of clause 1, wherein in the chargeable configuration powering of the electric golf trolley is substantially prevented; and/or wherein in the unchargeable configuration powering of the electric golf trolley is permitted.
3. The electric golf trolley according to clause 1 or clause 2, wherein the electric golf trolley further comprises an override feature configured to enable the electric golf trolley to be placed in a chargeable configuration when the electric golf trolley is not in a storage arrangement.
4. The electric golf trolley of clause 3, wherein the automatic transition from the unchargeable configuration to the chargeable configuration being associated with folding the electric golf trolley or part thereof, and/or
   the automatic transition from the chargeable configuration to the unchargeable configuration being associated with unfolding the electric golf trolley or part thereof.
5. The electric golf trolley of clause 4, wherein folding the electric golf trolley automatically transitions the electric golf trolley from the unchargeable configuration to the chargeable configuration; and the electric golf trolley is arranged to remain in the chargeable configuration during and following subsequent unfolding of the electric golf trolley.
6. The electric golf trolley according to any preceding clause, comprising a base and a frame, the frame including at least one moveable portion; wherein the or each moveable portion of the frame is reversibly foldable relative to the base during the transition from the driving or a driveable arrangement to the storage arrangement; wherein folding the or each moveable portion of the frame relative to the base automatically transitions the electric golf trolley from the unchargeable configuration to the chargeable configuration; and/or
   wherein unfolding the or each moveable portion of the frame relative to the base automatically transitions the electric golf trolley from the chargeable configuration to the unchargeable configuration.
7. The electric golf trolley according to any preceding clause, including a displaceable portion which is reciprocally displaceable from a discharging position in which the electric golf trolley may be powered by the battery and charging of the battery is substantially prevented, to a charging position in which charging of the battery is permitted and the battery is substantially electrically disconnected from the electric golf trolley; wherein the displaceable portion is configured to be automatically displaced from the discharging position to the charging position through folding of the electric golf trolley and/or the displaceable portion is configured to be automatically displaced from the charging position to the discharging position through unfolding of the electric golf trolley.
8. The electric golf trolley according to clause 7, wherein the displaceable portion is configured to be displaced from the discharging position to the charging position through folding of the electric golf trolley; and wherein the displaceable portion is configured to remain in the charging position during and following a subsequent unfolding of the electric golf trolley.
9. The electric golf trolley according to any preceding clause, wherein the battery is provided in a battery pack and concealed within a battery pack housing,
   the battery pack comprising a charging connector arranged to permit charging of the battery;
   and a displaceable portion movable relative to the pack housing;
   the displaceable portion of the battery pack being reciprocally moveable from a discharging position in which charging via the charging connector is substantially obstructed, to a charging position in which the charging connector is substantially exposed for charging;
   the battery pack being arranged such that when the displaceable portion of the battery pack is in the charging position, the battery is substantially electrically disconnected from the electric golf trolley;
   optionally, wherein the electric golf trolley includes a cooperating portion configured to operatively engage the displaceable portion of the battery pack during a transition from a driving or a driveable arrangement to a storage arrangement and/or from the storage arrangement to a driveable or driving arrangement.
10. The electric golf trolley according to any preceding clause, comprising a removable battery pack including the battery; optionally, wherein the removable battery pack including the battery is removed from the electric golf trolley.
11. The electric golf trolley according to clause 10, wherein the trolley further comprises a latch reversibly biased towards a position in which it retains the battery pack on the electric golf trolley.
12. An electric golf trolley battery pack comprising
   a battery concealed within a pack housing, the pack housing being arranged to attach to an electric golf trolley during use;
   the battery pack further comprising a displaceable portion moveable relative to the pack housing;
   the displaceable portion being reciprocally moveable from a discharging position in which powering of the electric golf trolley is permitted to a second non-discharging position in which powering of the electric golf trolley is substantially prevented;
   wherein the displaceable portion is configured to be displaced by a cooperating portion of the electric golf trolley.
13. An electric golf trolley battery pack comprising
   a battery concealed within a pack housing, the pack housing being arranged to attach to an electric golf trolley during use;
   the battery pack further comprising
   a charging connector arranged to permit charging of the battery and a displaceable portion moveable relative to the pack housing;
   the displaceable portion being reciprocally moveable from a discharging position in which charging via the charging connector is substantially obstructed to a charging position in which the charging connector is substantially exposed for charging,
   the battery pack being arranged such that when the displaceable portion is in the charging position, the battery is substantially electrically disconnected from an electric golf trolley; optionally, the displaceable portion being arranged to be displaced by a cooperating portion of an electric golf trolley.
14. An electric golf trolley comprising a battery pack in accordance with clause 12 or clause 13.
15. A method of storing an electric golf trolley, comprising the steps of:
   a. providing an electric golf trolley according to any of clauses 1 to 11 or clause 14;
   b. arranging the electric golf trolley in a storage arrangement; and
   c. optionally charging the electric golf trolley in the storage arrangement.

## Claims

1. An electric golf trolley having a discharging configuration in which the electric golf trolley may be powered by a battery, and a non-discharging configuration in which powering of the electric golf trolley by a battery is substantially prevented;
the electric golf trolley being further configured to transition between a driving arrangement and a storage arrangement;
wherein during a transition from the driving arrangement to the storage arrangement the electric golf trolley automatically transitions from the discharging configuration to a non-discharging configuration while a battery is attached to the electric golf trolley,
and/or;
wherein during a transition from the storage arrangement to the driving arrangement the electric golf trolley automatically transitions from the non-discharging configuration to a discharging configuration while a battery is attached to the electric golf trolley.

2. The electric golf trolley according to claim 1, including a battery for powering the trolley; wherein in the discharging configuration charging of the battery is substantially prevented; and/or wherein in the non-discharging configuration charging of the battery is permitted.

3. The electric golf trolley according to claim 1 or claim 2, wherein the electric golf trolley is passed through one or more transitional configurations between the driving arrangement and the storage arrangement; and automatic transition from the discharging to the non-discharging configuration and/or the automatic transition from the non-discharging to the discharging configuration is associated with being in or passing through one or more transitional configurations.

4. The electric golf trolley according to any preceding claim, wherein the automatic transition from the discharging configuration to the non-discharging configuration is associated with parking the electric golf trolley; optionally,
wherein the electric golf trolley includes a drive button and/or handle, and
wherein said automatic transition occurs due to a user releasing the drive button and/or handle; and/or, wherein the electric golf trolley is configured to transition to the non-discharging configuration once a pre-determined amount of time elapses after parking.

5. The electric golf trolley according to any preceding claim, wherein the electric golf trolley further comprises an override feature configured to enable the electric golf trolley to be placed in a non-discharging configuration when the electric golf trolley is not in a storage arrangement.

6. The electric golf trolley according to claim 5, wherein the automatic transition from the discharging configuration to the non-discharging configuration is associated with folding the electric golf trolley or part thereof, and/or
the automatic transition from the non-discharging configuration to the discharging configuration is associated with unfolding the electric golf trolley or part thereof; optionally,
wherein folding the electric golf trolley automatically transitions the electric golf trolley from the discharging configuration to the non-discharging configuration; and the electric golf trolley is arranged to remain in the non-discharging configuration during and following subsequent unfolding of the electric golf trolley.

7. The electric golf trolley according to any preceding claim, wherein the automatic transition from the discharging configuration to the non-discharging configuration occurs between a driveable arrangement and a storage arrangement of the electric golf trolley; and/or the automatic transition from the non-discharging configuration to the discharging configuration occurs between a storage arrangement and a driveable arrangement of the golf trolley.

8. The electric golf trolley according to any preceding claim, comprising a battery pack including a battery concealed within a pack housing; the battery pack further comprising a charging connector arranged to permit charging of the battery and a displaceable portion moveable relative to the pack housing; the displaceable portion being reciprocally moveable from a discharging position in which charging via the charging connector is substantially obstructed to a charging position in which the charging connector is substantially exposed for charging, the battery pack being arranged such that when the displaceable portion is in the charging position, the battery is substantially electrically disconnected from an electric golf trolley; optionally,
wherein the electric golf trolley includes a cooperating portion configured to operatively engage the displaceable portion of the battery pack during a transition from a driving or a driveable arrangement to a storage arrangement and/or from the storage arrangement to a driveable or driving arrangement; and/or wherein the displaceable portion includes a shutter which in the discharging position substantially obstructs charging via the charging connector.

9. An electric golf trolley battery pack comprising a battery concealed within a pack housing, the pack housing being arranged to attach to an electric golf trolley during use; the battery pack further comprising a displaceable portion moveable relative to the pack housing; the displaceable portion being reciprocally moveable from a discharging position in which powering of the electric golf trolley is permitted to a second non-discharging position in which powering of the electric golf trolley is substantially prevented; wherein the displaceable portion is configured to be displaced by a cooperating portion of the electric golf trolley.

10. An electric golf trolley battery pack comprising a battery concealed within a pack housing, the pack housing being arranged to attach to an electric golf trolley during use; the battery pack further comprising a charging connector arranged to permit charging of the battery and a displaceable portion moveable relative to the pack housing; the displaceable portion being reciprocally moveable from a discharging position in which charging via the charging connector is substantially obstructed to a charging position in which the charging connector is substantially exposed for charging, the battery pack being arranged such that when the displaceable portion is in the charging position, the battery is substantially electrically disconnected from an electric golf trolley.

11. The electric golf trolley battery pack of claim 10, the displaceable portion being arranged to be displaced by a cooperating portion of an electric golf trolley.

12. The electric golf trolley battery pack of claim 10 or claim 11, wherein the charging connector is located on the displaceable portion.

13. The electric golf trolley battery pack of claim 12, wherein in the discharging position the displaceable portion is located predominantly inside the pack housing and in a charging position part of the displaceable portion incorporating the charging connector protrudes from the pack housing.

14. The electric golf trolley battery pack of any of claims 9 to 13, the battery pack being arranged to be attached to an electric golf trolley which is reversibly collapsible from a driveable arrangement to a storage arrangement; the displaceable portion being arranged to be displaced towards a charging position by a cooperating portion of the electric golf trolley as the electric golf trolley is collapsed from a driveable arrangement towards its storage arrangement and/or returned to its discharging configuration by a cooperating portion of the electric golf trolley as the electric golf trolley is expanded from its storage arrangement towards its driveable arrangement.

15. An electric golf trolley comprising a battery pack in accordance with any of claims 9 to 14.
